# EUROPEAN PATENT APPLICATION

(11) **EP 1 536 423 A1**
(43) Date of publication of application: **01.06.2005**
(21) Application number: 03766743.3
(22) Date of filing: 05.08.2003
(51) Int. Cl.: G11B 20/10, G11B 20/14

(54) **DISK REPRODUCTION DEVICE AND DISK REPRODUCTION METHOD**

(30) Priority: 06.08.2002 JP 2002229158
(71) Applicant: Sony Corporation, Tokyo 141-0001 (JP)
(72) Inventor: KANO, Yasunori c/o SONY LSI DESIGN INC., Yokohama-shi, Kanagawa 240-0005 (JP)
(74) Representative: Thévenet, Jean-Bruno
(86) International application number: PCT/JP2003/009924
(87) International publication number: WO 2004/013852

(57) **Abstract**

This relates to a disk playback apparatus and a disk playback method in which an operating frequency of a demodulation circuit is reduced. The disk playback apparatus reads the data recorded on the disk and generates playback data, the apparatus being **characterized by** including a synchronous detection circuit (21) for detecting a predetermined synchronization pattern contained in the data, and identifying a detection timing, and an EFM demodulation circuit (23) for selectively extracting a part of the data one by one out of the data read from the disk according to the identified detection timing, and composing the extracted plurality of data so as to replace them with corresponding demodulation data.

## Description

### TECHNICAL FIELD

The present invention relates to a disk playback apparatus and a disk playback method for replaying data recorded on a disk.

### BACKGROUND ART

Generally, at the time of disk playback, data recorded on a disk is read by a pick-up device that detects a light reflected from the disk. Then, the data read by the pick-up device is taken into a playback apparatus by way of a clock signal (hereafter also referred to as a "channel clock") synchronized with the data by means of a PLL (Phase-Locked Loop) circuit.

Here, since the obtained data is serial data subjected to EFM (Eight-Fourteen Modulation) modulation, the data is restored by an EFM demodulation circuit in the playback apparatus. At this time, in a conventional playback apparatus, an operational frequency of the EFM demodulation circuit is determined by the channel clock synchronized with the above-mentioned serial data.

Accordingly, when carrying out high speed playback of data in the disk, it is necessary to increase the operational frequency by using a channel clock having a higher frequency.

However, there is a problem such that, if the above-mentioned operational frequency becomes higher, then noises produced in circuits other than the EFM demodulation circuit increase and, power consumption of the disk playback apparatus also increases.

Further, although the disk playback apparatus, for which it is necessary to guarantee the high operational frequency, needs an operation test by way of a clock signal having a high frequency, there is a problem such that a circuit tester has the difficulty in carrying out such an operation test.

The present invention is made in order to resolve the above problems, and an object is to provide a disk playback apparatus and a disk playback method capable or realizing a demodulation operation at a lower operational frequency.

### DISCLOSURE OF THE INVENTION

The object of the present invention is attained by providing a disk playback apparatus which reads data recorded on a disk and generates playback data, the disk playback apparatus being characterized by including: detection means for detecting a predetermined synchronization pattern contained in the data and for identifying a detection timing; selection means for selectively extracting parts of data one by one out of the data read from the disk according to the detection timing identified by the detection means; composite means for composing a plurality of data extracted by the selection means, so as to generate a composite data; and replacement means for replacing the composite data with a corresponding demodulation data so as to generate the playback data.

According to such means, corresponding to the detection timing of the synchronization pattern, the selection means selectively extracts parts of data one by one out of the data read from the disk, the composite means composes the extracted plurality of data, and the replacement means replaces the composite data by the demodulation data, so that the demodulation is carried out by collectively treating the composite data as a unit, whereby the operational frequency needed in the demodulation can be reduced.

More specifically, the detection means detects the synchronization pattern from data series read in a plurality of continuous cycles, identifies the detection timing according to a position of the synchronization pattern contained in the series. The selection means may include counting means for counting a number of clocks of an internal clock signal from an initial value according to detection timing, so as to selectively extract parts of data one by one out of the data read from the disk, according to a count value in the counting means.

Furthermore, the composite means may include a first and second data storage means, and the first and second data storage means each hold the data extracted by the selection means if the count value is even. The data currently held at the second data storage means is moved to the first data storage means if the count value is odd, so that the composite data can be generated.

Further, the another object of the present invention is attained by providing a disk playback method for reading data recorded on a disk and generating a playback data, the disk playback method being characterized by including: a detection step of detecting a predetermined synchronization pattern contained in the data and identifying a detection timing, a selection step of selectively extracting parts of data one by one out of the data read from the disk according to the identified detection timing; a composite step of composing a plurality of data extracted in the selection step so as to generate a composite data; and a replacement step of replacing the composite data by a corresponding demodulation data so as to generate the playback data.

According to such a method, with respect to the data recorded on the disk, the above-mentioned composite data can be collectively demodulated as a unit, so that the operational frequency needed in the demodulation can be reduced.

More particularly, in the above-mentioned detection step, the synchronization pattern is detected from the data series read during a plurality of continuous cycles and the detection timing is identified according to a position of the synchronization pattern contained in the series. In the above-mentioned selection step, according to a count value acquired by counting the number of clocks of the internal clock signal from an initial value according to the detection timing, a part of data is selectively extracted one by one out of the data read from the disk. In the above-mentioned composite step, if the count value is even, the extracted data are respectively held in the first and second data storage means in the selection step. If the count value is odd, the data currently held at the second data storage means is moved to the first data storage means so as to generate the composite data.

### BRIEF DESCRIPTION OF THE DRAWINGS

FIG 1 is a block diagram showing a structure of a disk playback apparatus in accordance with an embodiment of the present invention;
FIG 2 is a block diagram showing a structure of the EFM demodulation unit shown in FIG 1;
FIG 3 is a block diagram showing a structure of the synchronous detection circuit shown in FIG 2;
FIG 4 is a status transition diagram for explaining operation of the synchronous detection circuit shown in FIG 3;
FIG 5 is a block diagram showing a structure of the EFM demodulation circuit shown in FIG 2;
FIG 6 is a chart showing a structure of a frame data recorded on the disk shown in FIG 1; and
FIG 7 is a chart for explaining operation of the EFM demodulation circuit shown in FIG 4.

### BEST MODE FOR IMPLEMENTING THE PRESENT INVENTION

An embodiment of the present invention will be described below in detail, with reference to the drawings. It should be noted that the same reference symbols indicate the same or equivalent portions in the drawings.

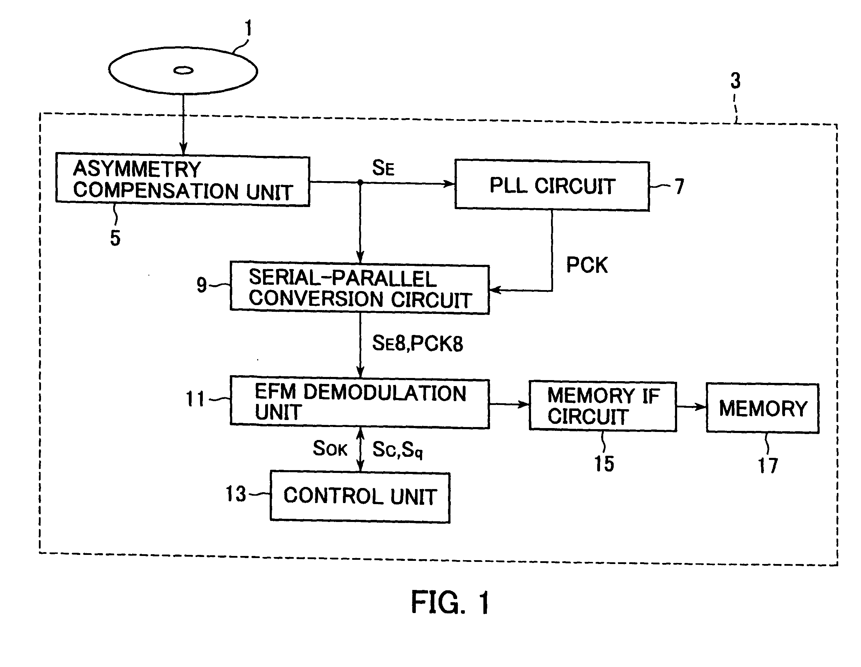

FIG. 1 is a block diagram showing a structure of a disk playback apparatus in accordance with an embodiment of the present invention. As shown in FIG. 1, a disk playback apparatus 3 in accordance with the present embodiment is an apparatus for replaying data recorded on an installed disk 1, and provided with an asymmetry compensation unit 5, a PLL circuit 7, a serial-parallel conversion circuit (hereafter also referred to as S/P conversion circuit 9) and an EFM (Eight-Fourteen Modulation) demodulation unit 11, a control unit 13, a memory IF circuit 15, and a memory 17.

The asymmetry compensation unit 5 receives a signal read from the disk 1. The PLL circuit 7 and the S/P conversion circuit 9 are connected to the asymmetry compensation unit 5. Further, the S/P conversion circuit 9 is also connected to the PLL circuit 7, and the EFM (Eight-Fourteen Modulation) demodulation unit 11 is connected to the S/P conversion circuit 9. The control unit 13 and the memory IF circuit 15 are connected to the EFM demodulation unit 11, and the memory 17 is connected to the memory IF circuit 15.

Having such a structure the disk playback apparatus 3 carries out the EFM demodulation of the data read from the disks 1, such as a CD (Compact Disc), by using, as an operational clock, a clock signal PCK8 derived by dividing a channel clock into one-eighths in frequency. An outline of its operation will be described below.

By removing a direct-current component of the signal read from the disk 1, the asymmetry compensation unit 5 generates a digital signal S_{E}, subjected to the EFM modulation, so as to be supplied to the PLL circuit 7 and the S/P conversion circuit 9. The PLL circuit 7 generates the channel clock PCK, which synchronizes with the supplied digital signal S_{E}, so as to be supplied to the S/P conversion circuit 9.

Further, the S/P conversion circuit 9 converts the supplied serial digital signal S_{E} into an 8 bit parallel signal S_{E}8, subjected to the EFM modulation, and generates a clock signal PCK8 by dividing the supplied channel clock PCK into eighths in frequency.

Here, the above-mentioned parallel signal S_{E}8 is regarded as data after carrying out NRZ (Non Return to Zero) conversion of the original EFM signal modulated by way of the EFM, and an example is shown in Table 1.

**Table 1**

| | |
|---|---|
| Original EFM Signal | 01111000011100011111111100 |
| After Conversion | 01000100010010010000000010 |

As shown in the above-mentioned Table 1, only a bit corresponding to a changing point (underlined) of the original EFM signal in the data after the NRZ conversion is set to "1" (underlined). Furthermore, the data after the thus obtained NRZ conversion are inputted into the highest bit of an 8 bit shift register one by one, the data are shifted from a higher bit to a lower bit at a predetermined timing, and if 8 bits gather, the data are simultaneously outputted, so that the above-mentioned parallel signal S_{E}8 is generated and outputted.

Then, regarding the clock signal PCK8 supplied from the S/P conversion circuit 9, as the operational clock, the EFM demodulation unit 11 carries out the EFM demodulation of the parallel signal S_{E}8 similarly supplied from the S/P conversion circuit 9. Furthermore, the structure and operation of the EFM demodulation unit 11 will be described in detail later.

Further, the data demodulated in the EFM demodulation unit 11 are stored in the memory 17 for error corrections through the memory IF circuit 15. On the other hand, the EFM demodulation unit 11 supplies, to the control unit 13, a score signal S_{C} indicating that a sub-code synchronization signal is detected in process of the demodulation as will be described later, and a sub-Q code Sq obtained after error checking. Thus, the control unit 13 can acquire an absolute time information data recorded on the disk 1 based on the supplied sub-Q code Sq.

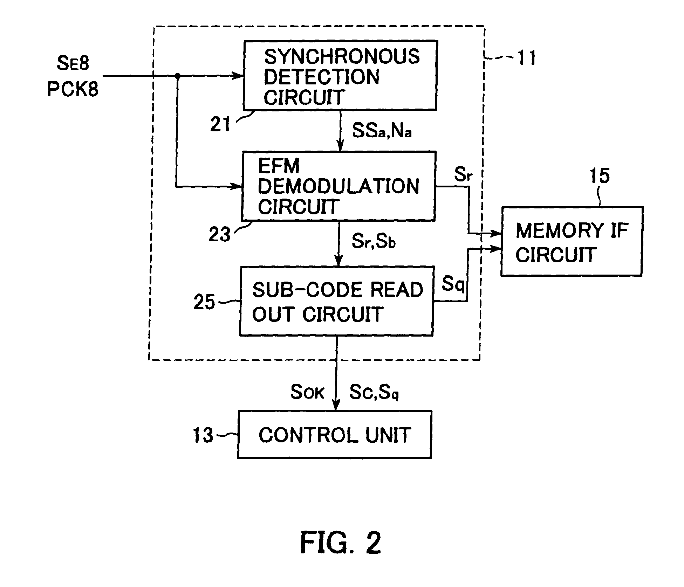

FIG. 2 is a block diagram showing a structure of the EFM demodulation unit 11 shown in FIG. 1. As shown in FIG. 2, the EFM demodulation unit 11 includes a synchronous detection circuit 21, an EFM demodulation circuit 23, and a sub-code read out circuit 25.

Here, the synchronous detection circuit 21 is connected to the S/P conversion circuit 9, and the EFM demodulation circuit 23 is connected to the S/P conversion circuit 9 and the synchronous detection circuit 21. Further, the sub-code read out circuit 25 is connected to the EFM demodulation circuit 23. Furthermore, the memory IF circuit 15 is connected to the EFM demodulation circuit 23 and the sub-code read out circuit 25, and the control unit 13 is connected to the sub-code read out circuit 25.

An outline of operation of the EFM demodulation unit 11 having the above structure will be described below. Firstly, the synchronous detection circuit 21 detects a synchronization pattern contained in the supplied parallel signal S_{E}8. If the synchronization pattern is detected, a synchronization pattern which is predicted to be detected next is specified. Furthermore, the predicted synchronization pattern is compared with the actually detected synchronization pattern, and it is determined whether or not they are in agreement with each other.

Furthermore, in order for the synchronous detection circuit 21 not to detect the wrong synchronization pattern at an unexpected timing, a synchronization protection window is internally generated for limiting a detection period to a predetermined timing. If the synchronization pattern cannot be detected at the above-mentioned predetermined timing, synchronization is maintained by using a self-generated synchronization signal.

The EFM demodulation circuit 23 carries out the EFM demodulation of the parallel signal S_{E}8 supplied from the S/P conversion circuit 9. Furthermore, the demodulated signal is supplied to the sub-code read out circuit 25 and also supplied to the memory IF circuit 15.

The sub-code read out circuit 25 detects a synchronization signal out of sub-codes contained in the supplied and demodulated signal, extracts the sub-Q code to be described later from the signal, and checks whether or not there is an error about the sub-Q code. Then, the sub-code read out circuit 25 supplies the sub-Q code to the control unit 13.

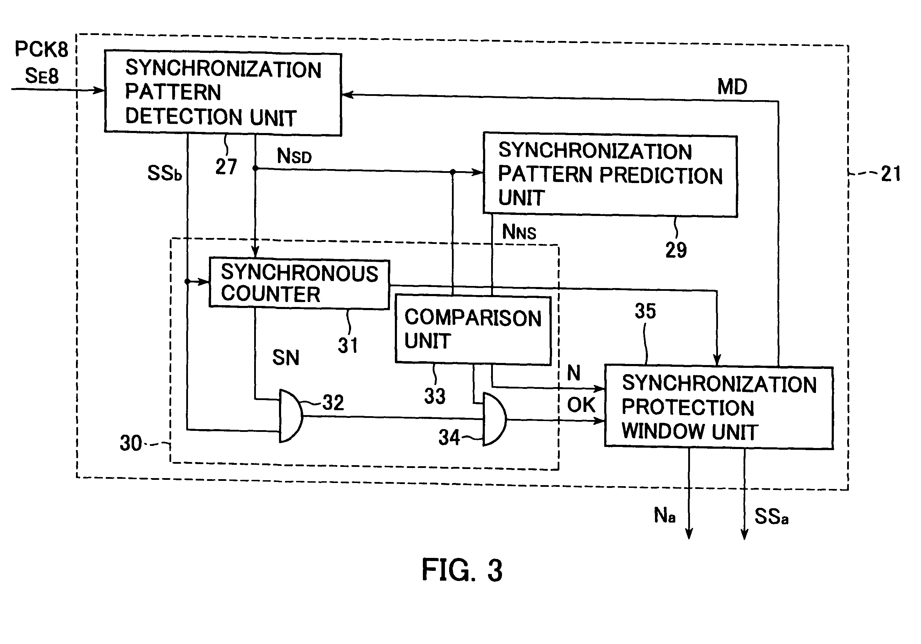

Each circuit which constitutes the EFM demodulation unit 11 as shown in FIG. 2 will be described in detail below. FIG. 3 is a block diagram showing a structure of the synchronous detection circuit 21 shown in FIG. 2. As shown in FIG. 3, the synchronous detection circuit 21 includes a synchronization pattern detection unit 27, a synchronization pattern prediction unit 29, a synchronous determination unit 30, and a synchronization protection window unit 35. The synchronous determination unit 30 includes a synchronization counter 31, AND circuits 32 and 34, and a comparison unit 33.

Here, the synchronization pattern detection unit 27 is connected to the S/P conversion circuit 9, and the synchronization pattern prediction unit 29 is connected to the synchronization pattern detection unit 27. Further, the synchronization counter 31 is connected to the synchronization pattern detection unit 27, and the AND circuit 32 is connected to the synchronization pattern detection unit 27 and the synchronization counter 31. Further, the comparison unit 33 is connected to the synchronization pattern detection unit 27 and the synchronization pattern prediction unit 29, and the AND circuit 34 is connected to the AND circuit 32 and the comparison unit 33. The synchronization protection window unit 35 is connected to the comparison unit 33, the AND circuit 34, and the synchronization counter 31.

Next, operation of the synchronous detection circuit 21 having the above structure will be described in detail.

Firstly, although the synchronization pattern detection unit 27 detects the synchronization pattern contained in the supplied parallel signal S_{E}8, the synchronization pattern (frame synchronization signal) to be detected here is (10000000000100000000001) as the data after the NRZ conversion. An example will be described where the synchronization pattern is detected in 4 cycles per 8 bits.

At this time, if detection of the above-mentioned synchronization pattern is completed in the fourth cycle, eight cases can be considered as shown in the following Table 2,

**Table 2**

| Case No | First Cycle b8b7b6b5b4b3b2b1 | Second Cycle b8b7b6b5b4b3b2b1 | Third Cycle b8b7b6b5b4b3b2b1 | Fourth Cycle b8b7b6b5b4b3b2b1 | N_{SD} |
|---|---|---|---|---|---|
| 0 | 000001xx | 00100000 | 00000000 | xxxxxxx1 | 01h |
| 1 | 00001xxx | 01000000 | 00000000 | xxxxxx10 | 02h |
| 2 | 0001xxxx | 10000000 | 00000000 | xxxxx100 | 04h |
| 3 | 001xxxxx | 00000000 | 00000001 | xxxx1000 | 08h |
| 4 | 01xxxxxx | 00000000 | 00000010 | xxx10000 | 10h |
| 5 | 1xxxxxxx | 00000000 | 00000100 | xx100000 | 20h |
| 6 | xxxxxxxx | 00000001 | 00001000 | x1000000 | 40h |
| 7 | xxxxxxxx | 0000001x | 00010000 | 10000000 | 80h |

In the above Table 2, the detected data are shown one by one from the highest bit b1 to the lowest bit b8 in the first cycle, then from the highest bit b1 to the lowest bit b8 in the second cycle, from the highest bit b1 to the lowest bit b8 in the third cycle, and from the highest bit b1 to the lowest bit b8 in the fourth cycle.

Accordingly, for example, in Table 2 the case number 0 shows the case where the above-mentioned synchronization pattern is detected from the bit b3 in the first cycle to the highest bit b1 in the fourth cycle, in which the synchronization pattern detection unit 27 specifies the detection timing of the synchronization pattern by identifying which of the eight cases, the case numbers 0-7, has detected the synchronization pattern.

If any of the synchronization patterns of the eight cases in the above Table 2 is detected, the synchronization pattern detection unit 27 generates a detection signal SSb which becomes at a high level during one period of the clock signal PCK8, and also generates a case identification signal N_{SD} indicating which of the cases shown in Table 2 has detected as the synchronization pattern.

For example, if the disk 1 is a CD, one frame of the data recorded on the CD consists of 588 bits, so that the data of one frame are processed in 73.5 (= 588/8) cycle. Thus, since the number of cycles required in order to process the data of one frame is not a natural number but a fraction of 0.5 cycle, the synchronization pattern is detected by alternately repeating two cases as shown in Table 2.

In other words, for example, if the synchronization pattern as shown in Table 2 is detected at the timing of the case number 2, the synchronization pattern is detected at the timing of the case number 6 in the following frame. In subsequent frames, the detection of the synchronization pattern by the case numbers 2 and 6 is repeated alternately.

Thus, since the synchronization pattern is detected with regularity, once the synchronization pattern is detected, it is possible to predict which case in the next frame allows detecting the synchronization pattern. Here, according to the case identification signal N_{SD} supplied from the synchronization pattern detection unit 27, the synchronization pattern prediction unit 29 predicts which case in the following frame allows detecting the synchronization pattern and generates a detection prediction signal N_{NS} for specifying the predicted case so as to supply it to the comparison unit 33.

Accordingly, the comparison unit 33 supplies an activated high-level signal to the AND circuit 34, if the supplied case identification signal N_{SD} and the supplied detection prediction signal N_{NS} are in agreement with each other, that is, if the case where the synchronization pattern is actually detected by the synchronization pattern detection unit 27, and the case where detection is predicted in the synchronization pattern prediction unit 29 are in agreement with each other.

On the other hand, the synchronization counter 31 counts the number of cycles after the synchronization pattern detection unit 27 detects the synchronization pattern until it detects the next synchronization pattern. At this time, the synchronization counter 31 initializes a counter value as shown in the following Table 3 according to the case identification signal N_{SD} supplied from the synchronization pattern detection unit 27.

**Table 3**

| N_{SD} | SN Generation Timing | Counter Value |
|---|---|---|
| 01h | 73 Cycles Later | 72 |
| 02h | 73 Cycles Later | 72 |
| 04h | 73 Cycles Later | 72 |
| 08h | 73 Cycles Later | 72 |
| 10h | 74 Cycles Later | 73 |
| 20h | 74 Cycles Later | 73 |
| 40h | 74 Cycles Later | 73 |
| 80h | 74 Cycles Later | 73 |

Here, if the synchronization counter 31 receives data of "01h" as the case identification signal N_{SD} from the synchronization pattern detection unit 27, it predicts that the next synchronization pattern will be detected after 73 cycles, then the counter value is initialized to 72 as shown in Table 3.

Furthermore, the synchronization counter 31 decrements the counter value at a ratio of 1 to progress of 1 cycle according to the supplied detection signal SSb, generates a timing anticipation signal SN which shows the detection timing of the synchronization pattern expected in the seventy-third cycle after the counter value is set to 0, and supplies it to the AND circuit 32.

Accordingly, if the timing anticipation signal SN and the detection signal SSb which are supplied are activated simultaneously, that is, if the synchronization pattern is detected at a timing expected by the synchronization counter 31, the AND circuit 32 supplies the activated high-level signal to the AND circuit 34.

As described above, if the case where the synchronization pattern is actually detected by the synchronization pattern detection unit 27, and the case where detection is predicted in the synchronization pattern prediction unit 29 are in agreement with each other, and if the synchronization pattern is detected at the timing expected by the synchronization counter 31, the synchronous determination unit 30 supplies a signal OK of high level from the AND circuit 34 to the synchronization protection window unit 35, judging that the synchronization pattern is detected normally.

Further, the synchronization protection window unit 35 restricts the detection timing of the synchronization pattern by using the synchronization counter 31. Here, in fact the synchronization pattern is often detected at a timing shifted from an ideal timing, so that it is caused to be detectable only within a certain range centered about the ideal timing.

Specifically, as shown in the following Table 4, the synchronization protection window unit 35 generates a mask data MD according to the case identification signal N_{SD} supplied as an identification signal N from the comparison unit 33, and, feeds it back to the synchronization pattern detection unit 27.

After obtaining a logical product between a pattern in the fourth cycle and the mask data MD as shown in Table 2, the synchronization pattern detection unit 27 generates the above-mentioned detection signal SSb.

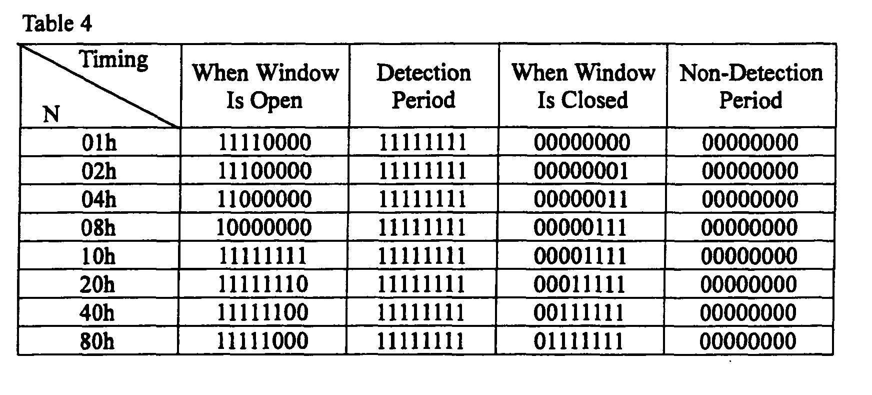

In other words, for example, as shown in Table 4, the synchronization protection window unit 35 supplies "11110000" at a detection start timing (when window is open) as the mask data MD to the synchronization pattern detection unit 27, if the case identification signal N_{SD} of "01h" is supplied from the comparison unit 33. The synchronization protection window unit 35 supplies "11111111" to the synchronization pattern detection unit 27 as the mask data MD during a synchronization pattern detection period. Since the case identification signal N_{SD} is set to "10h" at this time if the synchronization pattern detection unit 27 detects the ideal synchronization pattern, the synchronization protection window unit 35 supplies, to the synchronization pattern detection unit 27, "00001111" as the mask data MD at a detection end timing (when window is closed) according to the case identification signal N_{SD}. Furthermore, in the synchronization protection window unit 35, the above-mentioned detection start timing, the detection period, and the detection end timing are determined according to the counter value supplied from the synchronization counter 31.

Further, as shown in the above Table 4, without dependence on the case identification signal N_{SD} supplied from the comparison unit 33, but "00000000" is supplied as the mask data MD from the synchronization protection window unit 35 to the synchronization pattern detection unit 27 during the non-detection period of the synchronization pattern.

Accordingly, by generating the mask data MD in the synchronization protection window unit 35, and restricting the detection period by means of the mask data MD, it is possible to avoid the synchronization patterns being detected other than at a regular timing, so that the detection accuracy of a normal synchronization pattern can be raised.

According to the above operation, the synchronization protection window unit 35 outputs the identification signal N as the identification signal Na for specifying the case where the synchronization pattern is detected, and also outputs a signal OK as a detection signal SSa.

Furthermore, if the synchronization pattern is not detected during the above-mentioned detection period (within the window), the synchronization pattern detection unit 27 fixes the detection signal SSb and the case identification signal N_{SD} at high levels.

Accordingly, in this case, the timing anticipation signal SN is outputted from the AND circuit 32, and the timing anticipation signal SN is used instead of the detection signal SSb in the synchronous detection circuit 21. On the other hand, at this time, the comparison unit 33 supplies the detection prediction signal N_{NS} to the synchronization protection window unit 35 instead of the case identification signal N_{SD} as the identification signal N, and also supplies the signal of a low level to the AND circuit 34, if the case identification signal N_{SD} and the detection prediction signal N_{NS} are not in agreement with each other.

Furthermore, in this case the synchronization protection window unit 35 outputs the detection prediction signal N_{NS} as the identification signal Na, and also outputs the signal supplied from the synchronization counter 31 as the detection signal SSa.

A limit may be provided for so-called interpolation function as described above. If the normal synchronization pattern cannot be detected continuously more than a predetermined times, the synchronization protection window unit 35 fixes the mask data MD to "FFh" so as to cancel the limit during the above-mentioned detection period, and restarts the synchronization.

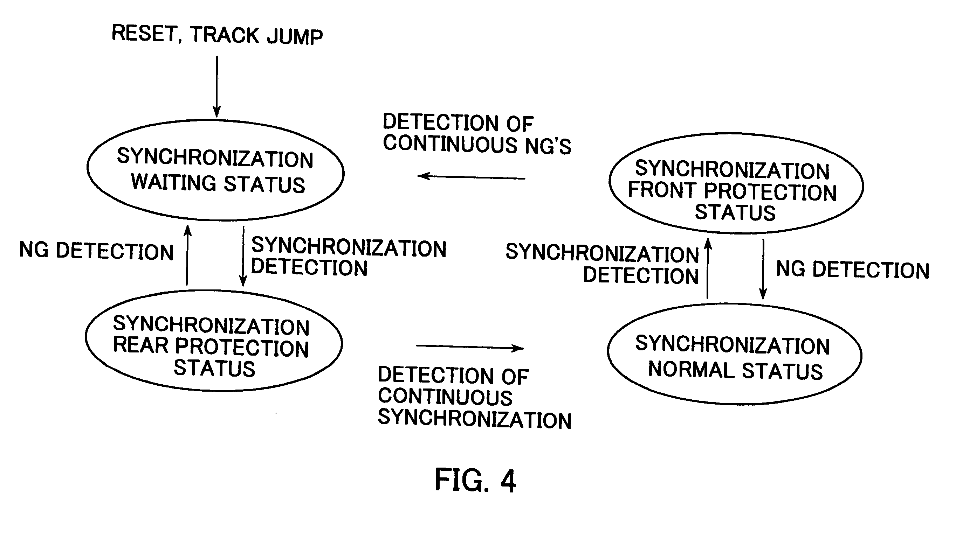

An operation of the synchronous detection circuit 21 will be described with reference to a status transition diagram of FIG 4. Firstly, there is a synchronization waiting status, waiting for the detection of the synchronization pattern after reset or a track jump. In this status, the synchronization protection window unit 35 fixes the mask data MD to "FFh" as described above.

If the synchronization pattern is detected in the synchronization waiting status, the process moves to a synchronization rear protection status where the number of times is less than three times which is the times of continuously detected normal synchronization pattern. Next, if the synchronization pattern is continuously detected three times in the synchronization rear protection status, it is determined that the synchronization is achieved, so that the process moves to a synchronization normal status. If the normal synchronization pattern cannot be detected (NG), the process returns to a synchronization waiting status. Furthermore, the above-mentioned "three times" is provided beforehand for the synchronization protection window unit 35, which is arranged as a variable set value.

Further, if the normal synchronization pattern cannot be detected in the synchronization normal status, the process moves to the synchronization front protection status where the number of times the normal synchronization pattern is not detected is considered as less than 12 consecutively, for example. If the synchronization pattern can be detected within the window in the synchronization front protection status, the process returns to the synchronization normal status. If the normal synchronization pattern cannot be detected 12 times continuously, the process returns to the synchronization waiting status. Furthermore, the above-mentioned "12 times" is also provided beforehand for the synchronization protection window unit 35, which is arranged as a variable set value.

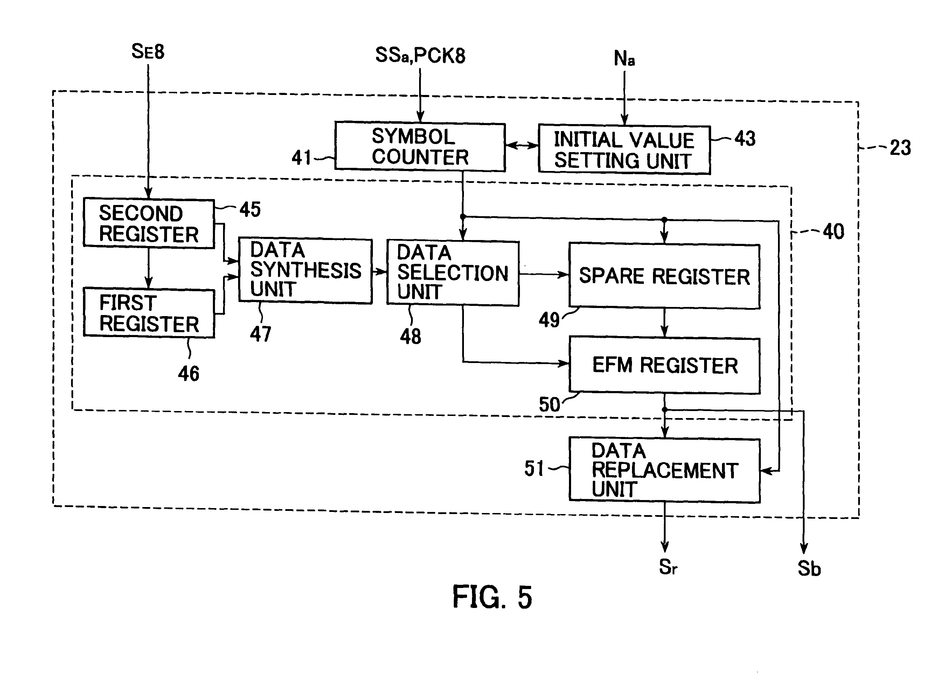

Next, the EFM demodulation circuit 23 as shown in FIG 2 will be described in detail. FIG 5 is a block diagram showing a structure of the EFM demodulation circuit 23. As shown in FIG 5, the EFM demodulation circuit 23 is provided with a register unit 40, a symbol counter 41, an initial value setting unit 43, and a data replacement unit 51. The register unit 40 includes a second register 45 and a first register 46 which constitute a two-stage register, and a data composite unit 47, a data selection unit 48, a spare register 49, and an EFM register 50.

Here, the symbol counter 41 is connected to the synchronization protection window unit 35 and the S/P conversion circuit 9. The initial value setting unit 43 is connected to the synchronization protection window unit 35. Further, the symbol counter 41 and the initial value setting unit 43 are interconnected.

On the other hand, the second register 45 is connected to the S/P conversion circuit 9. The first register 46 is connected to the second register 45, and the data composite unit 47 is connected to the first and second registers 46 and 45. Further, the data selection unit 48 is connected to the data composite unit 47 and the symbol counter 41. The spare register 49 is connected to the symbol counter 41 and the data selection unit 48. The EFM register 50 is connected to the data selection unit 48 and the spare register 49. The data replacement unit 51 is connected to the EFM register 50 and the symbol counter 41.

An operation of the EFM demodulation circuit 23 having the above structure will be described below.

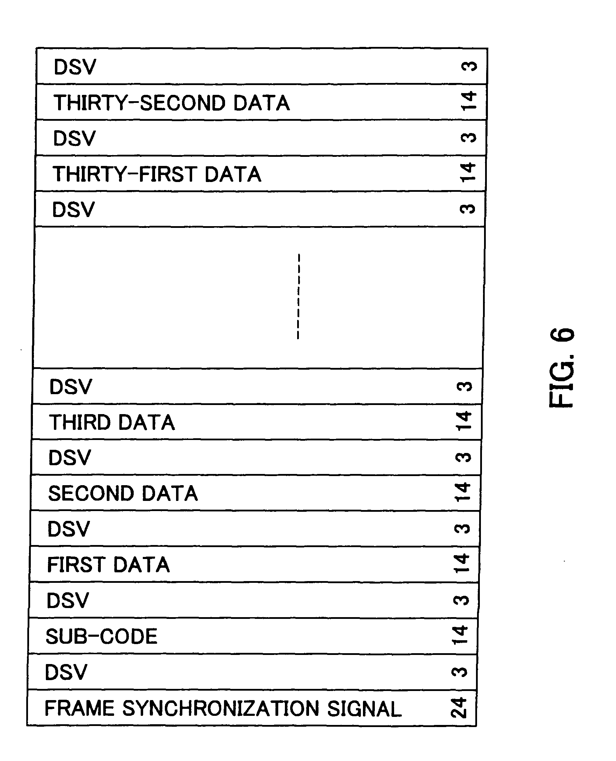

As described above, one frame of the data recorded on the CD consists of 588 bits. Its data structure is shown in FIG 6. In other words, one frame data includes a 24 bit frame synchronization signal recorded on the head, a 14 bit sub-code, the first through thirty-second data to be subjected to the EFM demodulation, each having 14 bits, and 3 bit DSV (Digital Sum Variation) signals each inserted between adjacent data etc.

As will be described below, the EFM demodulation circuit 23 latches only the sub-code and the first to thirty-second data among the data of one frame shown in FIG 6. Firstly, the parallel signal S_{E}8 outputted from the S/P conversion circuit 9 is latched per 16 bits, so that the second register 45 latches 8 bit data in the first half and transmits the latched 8 bit data to the first register 46. Then, the second register newly latches 8 bit data in the second half.

The data composite unit 47 constituted, for example, by registers composes data of 8 bits respectively latched to the first register 46 and the second register 45, and generates a 16 bit data R to be supplied to the data selection unit 48.

On the other hand, the symbol counter 41 loads an initial value from the initial value setting unit 43 according to the detection signal SSa supplied from the synchronization protection window unit 35. At this time, the initial value setting unit 43 supplies a load value as shown in the following Table 5 to the symbol counter 41 according to the identification signal Na supplied from the synchronization protection window unit 35.

**Table 5**

| | | | | | | | | |
|---|---|---|---|---|---|---|---|---|
| Na | 01h | 02h | 04h | 08h | 10h | 20h | 40h | 80h |
| Load Value | 0h | 2h | 4h | 6h | 8h | Ah | Ch | Eh |

Thus, the symbol counter 41 sets up the load value supplied from the initial value setting unit 43 as an initial value, and increments the initial value according to the clock signal PCK8 supplied from the S/P conversion circuit 9.

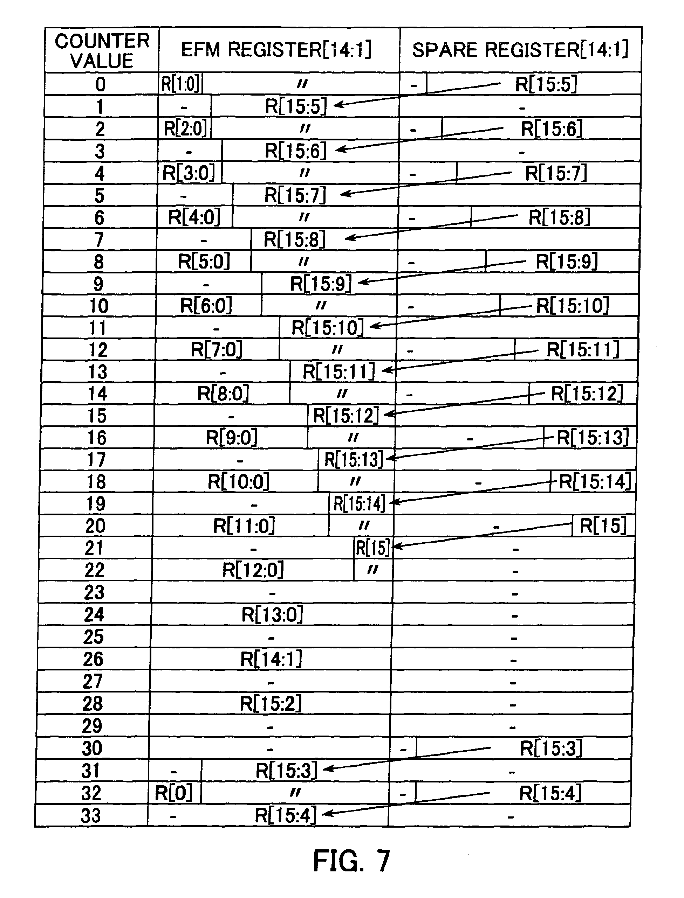

As shown in FIG 7, if a counter value supplied from the symbol counter 41 is even, the data selection unit 48 selectively extracts predetermined bits out of the data R supplied from the data composite unit 47, and supplies the extracted data to the spare register 49 and the EFM register 50, respectively. In other words, for example, if the counter value is 2, the data selection unit 48 selectively extracts a 3 bit data from the low rank 0 to the 2nd bit which constitute part of the data R, supplies the 3 bit data to the EFM register 50, selectively extracts a 10 bit data from the low rank 6 to the 15th bit which constitute another part of the data R, and supplies them to the spare register 49.

Furthermore, the spare register 49 shifts the stored data to the EFM register 50, if a counter value supplied from the symbol counter 41 is odd. In other words, for example, if the counter value is set to 3 as shown in FIG 7, the spare register 49 shifts the 10 bit data from the low rank 6 to 15th bit of the stored data R to the EFM register 50, as shown by arrows.

The above-mentioned operation is repeated by incrementing the counter value of the symbol counter 41 by 1. Thus, the data is shifted from the spare register 49 to the EFM register 50, and further a low rank bit of the data R is supplied from the data selection unit 48, so that a 14 bit data Sb modulated each time the counter value becomes an even number is composed.

Then, if the counter value supplied from the symbol counter 41 becomes an even number, the data replacement unit 51 replaces the above-mentioned 14 bit data Sb supplied from the EFM register 50 with the demodulation data Sr in light of a built-in EFM demodulation table.

Furthermore, the demodulation data Sr generated by such a method is stored through the memory IF circuit 15 in the memory 17 so as to be subjected to an error correction process and also supplied to the sub-code read out circuit 25. Further, the above-mentioned data Sb is also supplied to the sub-code read out circuit 25.

Next, the sub-code read out circuit 25 shown in FIG 2 will be described in detail. The sub-code read out circuit 25 detects the synchronization signal (hereafter, also referred to as "sub-code synchronization signal") recorded as the sub-code out of the data Sb supplied from the EFM register 50.

Furthermore, according to the standard of CD, in the sub-code as shown in FIG 6, a sub-code synchronization signal is recorded every 98 frames, without being subjected to the EFM modulation. The sub-code synchronization signal without being subjected to the EFM modulation is to be decoded.

If the data Sb supplied from the EFM register 50 is either a first synchronization pattern (10000000000100) or a second synchronization pattern (01001000000000), the sub-code read out circuit 25 determines that the sub-code synchronization signal has been detected, and generates the score signal S_{C} to be supplied to the control unit 13.

Further, out of sub-code which is a part of the demodulation data Sr obtained by the EFM demodulation circuit 23, the sub-code read out circuit 25 extracts the data called the sub-Q code (sub-code bit) one by one, and collectively inputs the sub-Q code Sq for 96 bits into a built-in CRC (Cyclic Redundancy Check) circuit. If it is determined that the sub-Q codes are exact data in the CRC circuit, the sub-code read out circuit 25 supplies a signal S_{OK} to the control unit 13.

Further, although the sub-code read out circuit 25 supplies the above-mentioned sub-Q code Sq to the control unit 13, since the sub-Q code is to have one unit by 96 bits, for example, this sub-Q code is held by the shift register which has ten stages of 8 bit storage areas as an example. If the control unit 13 accesses this shift register 10 times in this case, the whole sub-Q code Sq held at this shift register is read.

Here, by performing the above-mentioned access if the score signal S_{C} and the signal S_{OK} are received from the EFM demodulation unit 11, the control unit 13 can receive the exact sub-Q code Sq, and acquire an absolute time data with sufficient accuracy from the disk 1.

Furthermore, the sub-Q code Sq is stored in the memory 17 through the memory IF circuit 15, and is used also as data for specifying the demodulation data Sr generated by the EFM demodulation circuit 23.

As described above, according to the disk playback apparatus and the disk playback method in accordance with the embodiments of the present invention, the data replacement unit 51 collectively replaces the 14 bit data Sb generated in the EFM register 50 with the demodulation data Sr, and the EFM demodulation of the data recorded on the disk 1 can be carried out with the operating frequency lower than that of conventional one, for example, an operating frequency of 1/8 of the conventional one, whereby the disk playback apparatus can have a simple structure with a small circuit scale.

Further, as described above, the operating frequency needed for the EFM demodulation can be reduced, so that power consumption of the disk playback apparatus can be reduced, the noises occurred in circuits other than the EFM demodulation unit 11 can also be reduced, and playback accuracy can be raised.

Furthermore, since it is not necessary to guarantee a high operating frequency in the EFM demodulation, an operation test by a clock signal having a high frequency becomes unnecessary, whereby the operation test by a circuit tester can also be realized easily.

According to the disk playback apparatus in accordance with the present invention, the operating frequency needed for demodulation can be reduced. Accordingly, there is provided the disk playback apparatus having high playback accuracy and making it easier to perform the test.

Further, according to the disk playback apparatus and the disk playback method in accordance with the present invention, the operating frequency needed for demodulation can be reduced. Accordingly, the power consumption when performing the playback operation can also be reduced.

## Claims

1. A disk playback apparatus that reads data recorded on a disk and generates playback data, the disk playback apparatus being **characterized by** comprising:
detection means for detecting a predetermined synchronization pattern contained in the data and for identifying a detection timing;
selection means for selectively extracting a part of data one by one out of the data read from the disk according to the detection timing identified by the detection means;
composite means for composing a plurality of data extracted by the selection means, so as to generate a composite data; and
replacement means for replacing the composite data with a corresponding demodulation data so as to generate the playback data.

2. The disk playback apparatus according to Claim 1, wherein:
the detection means detects the synchronization pattern from data series read in a plurality of continuous cycles, and identifies the detection timing according to a position of the synchronization pattern contained in the series.

3. The disk playback apparatus according to Claim 1, wherein:
the selection means include
initial value storage means for storing an initial value according to the detection timing,
counting means for loading the initial value according to the detection timing from the initial value storage means, and counting the number of clocks of an internal clock signal from the initial value; and
the selection means selectively extract parts of data one by one out of the data read from the disk, according to a count value in the counting means.

4. The disk playback apparatus according to Claim 3, wherein:
the composite means include a first and second data storage means;
each of the first and second data storage means hold the data extracted by the selection means if the count value is even, and the data currently held at the second data storage means is moved to the first data storage means if the count value is odd, whereby the composite data is generated.

5. A disk playback method for reading data recorded on a disk and generating a playback data, the disk playback method being **characterized by** comprising:
a detection step of detecting a predetermined synchronization pattern contained in the data and identifying a detection timing;
a selection step of selectively extracting a part of data one by one out of the data read from the disk according to the identified detection timing;
a composite step of composing a plurality of data extracted in the selection step so as to generate a composite data; and
a replacement step of replacing the composite data by a corresponding demodulation data so as to generate the playback data.

6. The disk playback method according to Claim 5, wherein:
in the detection step, the synchronization pattern is detected from the data series read during a plurality of continuous cycles and the detection timing is identified according to a position of the synchronization pattern contained in the series.

7. The disk playback method according to Claim 5, wherein:
in the selection step, a part of data is selectively extracted one by one out of the data read from the disk according to a count value acquired by counting the number of clocks of the internal clock signal from an initial value in accordance with the detection timing.

8. The disk playback method according to Claim 7, wherein:
in the composite step, the extracted data is respectively held in the first and second data storage means in the selection step if the count value is even, and the data currently held at the second data storage means is moved to the first data storage means if the count value is odd, whereby generating the composite data.
